# EUROPÄISCHE PATENTSCHRIFT

(11) **EP 2 314 903 B1**
(45) Veröffentlichungstag und Bekanntmachung des Hinweises auf die Patenterteilung: **31.05.2017**
(21) Anmeldenummer: 10013927.8
(22) Anmeldetag: 25.10.2010
(51) Int. Cl.: F16L 5/02

(54) **System und Verfahren zum Einbau eines Rohrs in einer Wandöffnung sowie Expandiertes Verpressharz und Rohmanschette dafür**
System and method for installing a tube in a wall opening and expanded reaction resin and cuff for the same
Système et procédé destinés à l'intégration d'un tuyau dans une ouverture de mur ainsi que résine comprimée expansée et manchette correspondante

(30) Priorität: 23.10.2009 DE 102009050539
(43) Veröffentlichungstag der Anmeldung: 27.04.2011
(73) Patentinhaber: Büttig, Hans Peter, 56076 Koblenz (DE)
(72) Erfinder: Büttig, Hans Peter, 56076 Koblenz (DE)
(74) Vertreter: Bittner, Bernhard

(56) Entgegenhaltungen:
- DE-A1- 19 628 988
- DE-U1- 9 414 082
- GB-A- 1 587 400
- US-A- 4 607 469

## Beschreibung

Die Erfindung betrifft ein System und Verfahren zum Einbau eines Rohrs in einer Wandöffnung. Installationsdurchführungen durch Wände sind beispielsweise bei Hauseinführungen für Neubau, Altbau und Sanierung erforderlich. Hierbei werden üblicherweise Rohre durch Öffnungen in einer Gebäudewand geführt, um Hausanschlüsse für Strom, Gas, Wasser und Fernwärme oder Kommunikationsleitungen usw. zu realisieren, die in der Regel unter dem Erdboden verlegt werden. Die Rohre dienen dem Schutz der in das Haus eingeführten Leitungen (US-A-4 607 469). Zudem sind oft Öffnungen in Gebäudewänden oder alle anderen Arten von Öffnungen, Durchführungen oder Sicken in der Flugzeugindustrie, Fahrzeugindustrie, dem Maschinenbau, dem Schiffsbau, dem Schwimmbadbau und den Elektro-/Elektronikbereichen zu verfüllen und zu vergießen. Hierbei ist üblicherweise ein gas- und wasserdichtes Abdichten der Öffnungen bzw. von Rohren in den Öffnungen erforderlich. Anforderungen hierfür sind oft in Normen festgelegt, die beispielsweise für ein jeweiliges Land oder international gelten können.

In der folgenden Beschreibung wird der Einfachheit halber insbesondere auf Öffnungen in Gebäudewänden Bezug genommen, auch wenn die Beschreibungen analog auch für Öffnungen in Wänden bei den anderen genannten Anwendungsbereichen gelten.

Im Gebäudebereich regeln vielzählige Normen, was unter einer gebrauchstauglichen und mängelfreien Ausführung von Hausanschlusselementen als einzelnes Bauteil und als Bestandteil des Baukörpers, wie beispielsweise eines Gebäudes oder eines Schiffes usw. verstanden wird. Solche Normen sind derzeit die DIN 1986, DIN 1988, DIN 18012, DIN 18195, DIN 18336, G-459-1, G-459-2, G-459-1-B, VP-601, EW-400-1, EW-400-2, EW-400-3, W 404, GW-322-2.

Das bedeutet beispielsweise, dass Hausanschlüsse einschließlich Formstücke, Armaturen und Verbindungen sowohl dicht als auch so beschaffen und eingebaut sein müssen, dass sie den bei bestimmungsgemäßem Betrieb auftretenden Beanspruchungen standhalten. Hierzu muss der Ringraum zwischen Hausanschlussleitung und Mantelrohr sowie die Montageöffnung zwischen Mantelrohr und Wand oder Bodenplatte, bzw. Hausanschlussleitung und Wand oder Bodenplatte, in begrenztem Maße in der Lage sein, Schwind-und Quellbewegungen sowie Bauteilverformungen aufzunehmen und zum Anschlussraum dicht sein. Außerdem sind Hausanschlüsse mindestens für den maximal zulässigen Betriebsdruck zu bemessen, für den das Rohrnetz, an das die Hausanschlüsse angeschlossen werden, ausgelegt ist bzw. gebaut wird. Kritische Punkte sind hierbei immer die Ringraumabdichtungen zur Gebäudewand oder Mantelrohr zur Hauseinführung oder des Hauseinführungskombinationssystems.

Derzeit kommen für die genannten Bereiche hydraulische Quellmörtel zum Einsatz, welche für ihre Belastbarkeit u.a. eine Wartezeit von einigen Tagen (Enddurchhärtung nach 28 Tagen) bedingen. Auch dann können die hydraulischen Quellmörtel mangels kontrollierter Ringraumfüllung nur geringe Kräfte aufnehmen. Sie verlieren auch aufgrund fehlender Adhäsion zu den Mauerdurchbrüchen oder Kernbohröffnungen und im Speziellen PVC oder PE Kunststoffen (z.B. Hausführungs-Kombinationssysteme), unter Belastung ihre ursprüngliche Dichtfunktion. Als Folge davon kann Grund- oder Sickerwasser sowie Gas an der Hauseinführung eindringen und erhebliche Schäden verursachen. Außerdem ist der Schwund des mitverwendeten Wassers zum eingebrachten hydraulischen Quellmörtel sehr schwer oder gar nicht einstellbar. Die maximal zugesicherte Expansion des Quellmörtels beträgt 0,3 % Volumen (z.B. 1000 ml Füllvolumen entsprechen 2,5 - 3,0 kg Trockenmasse + Wasser ergibt 0,3 % Volumen = 1009 ml Füllvolumen). Darüber hinaus sind Fugenfüllmaterialien aus Expansionsharzen auf der Basis von Polyurethanharz, wie PU-Schaumstoffe, PUR-Montageschäume usw., mit höherem Raumgewicht bekannt. Diese sind durch ihre Spezifikation immer offenzellig. Dadurch sind Expansionsharze auf der Basis von Polyurethanharz weder gas- noch wasserdicht. Zudem sind sie durch Hydrolyse (Spaltung einer chemischen Verbindung unter Anlagerung eines Wassermoleküls) gering dauerbeständig und entsprechen nicht den Anforderungen der DVGW-Arbeitsblätter der G459 / VP601 / W400 / W404 / G322-2 / DIN 18195 / 1988 zur Ringraumabdichtung für Betriebsdrücke bis 4 bar (1 bar = 10⁵ Pa). Außerdem entsprechen sie in Bezug auf eine erforderliche Luftdichtheit nicht der Energieeinsparverordnung für den Hochbau (DIN 4108 Teil 7 Ausgabe 2002).

Die Installationstechnik der Abdichtung von Gas- und Wasserhauseinführungen im Tiefbaubereich erfordert gegenüber hydraulischen Quellmörteln und/oder Polyurethanharzen aufgrund der DVGW Norm G459-1 mit einem Betriebsdruck bis 4 bar (1 bar = 10⁵ Pa) oder DVGW Norm VP601 mit einem Betriebsdruck von 1 bar (1 bar = 10⁵ Pa) ein weit höheres Maß an dauerhafter Zuverlässigkeit der gas- und wasserdichten Verfüllprodukte.

Daher ist es Aufgabe der Erfindung, ein System und ein Verfahren zum Einbau eines Rohrs in einer Wandöffnung für ein gas- und wasserdichtes Abdichten von Rohren in Wandöffnungen zur Verfügung zu stellen.

Die Aufgabe wird durch ein System zum Einbau eines Rohrs in einer Wandöffnung nach Patentanspruch 1 gelöst. Vorteilhafte Ausgestaltungen des Systems sind in den abhängigen Patentansprüchen angegeben.

Das System umfasst eine Raumerzeugungseinrichtung zum Erzeugen eines gekammerten Raums zwischen dem Rohr und der Wandöffnung, expandierendes Verpressharz mit einem Expansionsvolumen von 3,0 bis 5,0 : 1 im gekammerten Raum zum Einbringen in den durch die Raumerzeugungseinrichtung erzeugten gekammerten Raum, und ein Einfüllrohr zum Einfüllen des expandierenden Verpressharzes in den durch die Raumerzeugungseinrichtung erzeugten gekammerten Raum und zum Einsatz in die Raumerzeugungseinrichtung.

Das Einfüllrohr hat vorzugsweise eine Schlauchverlängerung und eine Sicht- und Kontrollkappe zum Sichten und Kontrollieren eines Füllstands des expandierenden Verpressharzes in dem gekammerten Raum, wobei das Einfüllrohr zum Einsatz in die Raumerzeugungseinrichtung derart vorgesehen ist, dass die Sicht- und Kontrollkappe außerhalb des erzeugten gekammerten Raums angeordnet ist.

Es ist u.a. für das grabenlose (ohne Kopfloch) Auswechseln von Gas- und Wasserrohrleitungen vorteilhaft, wenn die Raumerzeugungseinrichtung eine Rohrmanschette zum Aufsetzen auf das Rohr und zum Einbringen zwischen die Wandöffnung und das Rohr umfasst.

Die Raumerzeugungseinrichtung kann einen Zentrierring mit einem Flansch zum Ansetzen an die die Wandöffnung umgebende Wand umfassen, wobei der Zentrierring eine Einfüllöffnung zum Einsatz des Einfüllrohrs aufweist.

Das expandierende Verpressharz hat ein Expansionsvolumen von 3,0 bis 5,0 : 1 im gekammerten Raum, bevorzugt ein Expansionsvolumen von 3,5 bis 4,0 : 1. Hierbei ist das expandierende Verpressharz schwundfrei, wenn es ausgehärtet ist. Zudem kann das expandierende Verpressharz ein Festkörpervolumen von 100 % haben, wenn es ausgehärtet ist. Es ist möglich, dass das expandierende Verpressharz bei einem darauf wirkenden Betriebsdruck mindestens bis 4 bar (1 bar = 10⁵ Pa) gasdicht und bei einem darauf wirkenden Betriebsdruck mindestens bis 10 bar (1 bar = 10⁵ Pa) wasserdicht ist, wenn es ausgehärtet ist. Diese gas- und/oder wasserabdichtende Eigenschaft des expandierenden Verpressharzes im ausgehärteten Zustand basiert insbesondere auf der Oberflächenbeschaffenheit. Unter der Oberfläche ist hierbei die Kontaktfläche des expandierenden Verpressharzes zur Umgebung, beispielsweise dem Mauerwerk oder der Rohrleitung, zu verstehen. Bevorzugt weist die Oberfläche des expandierenden Verpressharzes im ausgehärteten Zustand keine zelloffene, poröse Struktur auf, wie beispielsweise von den oben erwähnten PU-Schaumstoffen oder PUR-Montageschäumen bekannt, sondern verfügt bevorzugt über eine geschlossenporige

Oberfläche, welche zudem als Diffusionsbarriere für gasförmige oder flüssige Stoffe wirkt. Ferner ist denkbar, dass die Oberfläche des ausgehärteten Verpressharzes Aussparungen aufweist, welche durch das bei der Expansion freiwerdende Treibmittel bedingt sind. Bevorzugt sind jedoch derartige Aussparungen zum Volumen des ausgehärteten Verpressharzes hin abgeschlossen ausgebildet, so dass keine durch das Volumen durchgängige Kanalbildung bedingt ist. Dies ist vorteilhaft, da somit die gas- und/oder wasserabdichtende Eigenschaft des ausgehärteten Verpressharzes bedingt wird.

Darüber hinaus weist das expandierende Verpressharz im gekammerten Raum eine Dichte von größer gleich 400 kg/m³ auf. Dies ist vorteilhaft, da eine derart hohe Dichte des expandierenden Verpressharzes im gekammerten Raum eine stärkere Abdichtung des abzudichtenden Bereiches darstellt, beispielsweise in Bezug auf Wasser oder Gas, als vergleichbare expandierende Verpressharze, welche im gekammerten Raum eine niedrigere Dichte aufweisen.

Die Rohrmanschette hat einen flexiblen rohrförmigen Körper, der eine Vielzahl von ringförmigen Ausbuchtungen aufweist. Hierbei weist ein Ende des flexiblen rohrförmigen Körpers einen geringeren kreisförmigen Querschnitt als ein anderes Ende des flexiblen rohrförmigen Körpers auf. Die ringförmigen Ausbuchtungen haben eine unterschiedliche Breite. Es ist vorteilhaft, wenn sie einen unterschiedlichen äußeren Ringdurchmesser haben.

Zudem kann die größte ringförmige Ausbuchtung der Vielzahl von ringförmigen Ausbuchtungen ein Halbring sein, der das andere Ende des rohrförmigen Körpers mit dem größeren kreisförmigen Querschnitt bildet und der durch Durchschneiden eines Rings in der Ebene seines Durchmessers gebildet ist.

Das Ende des rohrförmigen Körpers mit dem geringeren kreisförmigen Querschnitt kann an die schmalste ringförmige Ausbuchtung der Vielzahl von ringförmigen Ausbuchtungen angrenzen.

Es besteht auch die Möglichkeit, dass die Vielzahl von ringförmigen Ausbuchtungen derart angeordnet sind, dass der Außendurchmesser der Vielzahl von ringförmigen Ausbuchtungen von dem Ende des rohrförmigen Körpers mit dem geringeren kreisförmigen Querschnitt zu dem Ende des rohrförmigen Körpers mit dem größeren kreisförmigen Querschnitt hin ansteigt.

Die zuvor genannte Aufgabe wird zudem durch ein Verfahren zum Einbau eines Rohrs in einer Wandöffnung nach Patentanspruch 13 gelöst.

Das Verfahren umfasst die Schritte: Einsetzen des Rohrs in die Wandöffnung; Einschieben eines Einfüllrohrs in den Raum zwischen Rohr und Wandöffnung, welches zum Einfüllen von expandierendem Verpressharz in den Raum dient; Einsetzen des Einfüllrohrs in eine Raumerzeugungseinrichtung; Erzeugen eines gekammerten Raums zwischen dem Rohr und der Wandöffnung mit der Raumerzeugungseinrichtung; und Einbringen von expandierendem Verpressharz mit einem Expansionsvolumen von 3,0 bis 5,0 : 1, bevorzugt von 3,5 bis 4,0 : 1, im gekammerten Raum in den mit der Raumerzeugungseinrichtung erzeugten gekammerten Raum. Der Schritt zum Erzeugen eines gekammerten Raums zwischen dem Rohr und der Wandöffnung wird mit einer Raumerzeugungseinrichtung ausgeführt, welche eine wie zuvor beschrieben konstruierte Rohrmanschette und Zentrierring mit einem Flansch zum Ansetzen an die die Wandöffnung umgebende Wand umfasst, wobei der Zentrierring eine Einfüllöffnung zum Einsatz des Einfüllrohrs aufweist. Hierbei umfasst das Verfahren die Schritte:
Vormontieren der Rohrmanschette an dem Rohr, bevor das Rohr in die Wandöffnung eingesetzt ist, wobei die Rohrmanschette derart an das Rohr vormontiert wird, dass das Ende des rohrförmigen Körpers mit geringeren kreisförmigen Querschnitt mittels Kabelbinder an dem Rohr befestigt wird; Einschieben des Rohres mit der vormontierten Rohrmanschette in die Wandöffnung derart, dass das Ende des rohrförmigen Körpers mit dem geringeren kreisförmigen Querschnitt zuerst in die Wandöffnung eingeschoben wird, wobei das Rohr mit der vormontierten Rohrmanschette weiter durch die Wandöffnung geschoben wird als die Rohrmanschette lang ist; Bewegen des Rohrs und dadurch der vormontierten Rohrmanschette derart, dass sich die Rohrmanschette an dem Rohr wieder entfaltet; Zurückziehen des Rohrs aus der Wandöffnung, bis die Rohrmanschette an der die Wandöffnung umgebenden Wand außen anliegt; Klemmen des Zentrierrings zwischen Rohr und Wandöffnung durch Einschieben des Einfüllrohrs in die Einfüllöffnung des Zentrierrings.

Mit dem zuvor beschriebenen System und Verfahren wird eine dauerhafte kraftschlüssige gas- und druckwasserdichte Verbindung zum Abdichten und Befestigen bis 4 bar (1 bar = 10⁵ Pa) vor der Gebäudewand und alle Arten von Rohrdurchführung in Verbindung mit hoher Auszugssicherheit > 30 kN erreicht.

Bezogen auf eine Umgebungstemperatur, wie beispielsweise 15 °C, kann das System den Raum zwischen einer Kernbohrung und ihren Einbauteilen, bzw. den darin eingebauten Teilen, auf den gesamten Querschnitt der Gebäudewand kontrolliert dauerhaft, gas- und wasserdicht, kraft- und formschlüssig verschließen. Hierbei garantiert insbesondere das günstige Expansionsverhalten von 3,0 bis 5,0 : 1 des expandierenden Verpressharzes im gekammerten Raum diese Eigenschaft. Der fertiggestellte Einbau ist gas- und wasserdicht nach DIN 1986, DIN 1988, DIN 18012, DIN 18195, DIN 18336, DVGW EW-400-1, EW-400-2, EW-400-3, W 404, DVGW G-459-1, G-459-2, G-459-1-B, DVGW VP-601, GW-322-2 und erfüllt höchste Anforderungen an die Auszugssicherheit, wie zuvor angegeben.

Durch den Einsatz von Kernbohrsystemen für die Herstellung von kontrollierten Bohröffnungen können für die Hauseinführungen abgestimmte Zentrierringsätze eingesetzt werden. Der Vorteil dieser schnellen Einbaumethode liegt in der waagerechten Zentrierung der Hauseinführung zur Kernbohröffnung. Dadurch wird sichergestellt, dass der Raum zur Kernbohröffnung und den Einbausystemen über den ganzen Querschnitt der Gebäudewand so klein wie möglich herzustellen ist, wodurch axiale Kräfte auf die Hauseinführung vermieden werden. Bauteile, wie beispielsweise Hauseinführungen, welche nach dem Einbau ein Torsionsmoment übertragen können, sind bevorzugt derart eingebaut, dass sie Torsionsmomenten DN 25 (1") 240 N/m, DN 32 (1 ¼ ") 300 N/m, DN 40 (1 ½ ") 360 N/m, DN 50 (2") 480 N/m bei einer Einwirkzeit von 10 Sekunden standhalten.

Zudem sind das expandierende Verpressharz, die Rohrmanschette und alle benötigten Teile kostengünstig und ihr Einbau sehr einfach und damit ebenfalls zeitsparend und kostengünstig.

Nachfolgend wird die Erfindung unter Bezugnahme auf die beiliegende Zeichnung näher beschrieben. Es zeigen:
- Fig. 1: eine Querschnittsansicht eines in eine Wandöffnung eingebauten Rohres;
- Fig. 2: eine Handdruckpistole zum Einfüllen von expandierendem Verpressharz in ein Einfüllrohr;
- Fig. 3: eine weitere Querschnittsansicht eines in eine Wandöffnung eingebauten Rohres;
- Fig. 4a: eine Querschnittsansicht eines in eine als Kernbohrung ausgeführte Wandöffnung eingebauten Rohres;
- Fig. 4b: eine Draufsicht auf einen Zentrierring mit Flansch und Einfüllöffnung in Einbaustellung;
- Fig. 4c: eine Draufsicht auf einen Zentrierring ohne Flansch jedoch mit Einfüllöffnung in Einbaustellung;
- Fig. 5: eine weitere Querschnittsansicht eines in eine als Kernbohrung ausgeführte Wandöffnung eingebauten Rohres;
- Fig. 6a: eine weitere Querschnittsansicht eines in eine als Kernbohrung ausgeführte Wandöffnung eingebauten Rohres;
- Fig. 6b: eine Draufsicht auf einen Zentrierring mit Flansch und Einfüllöffnung in Einbaustellung;
- Fig. 6c: eine Draufsicht auf einen Zentrierring aus zwei Zentrierringhalbschalen ohne Flansch in Einbaustellung;
- Fig. 7: eine Querschnittsansicht eines in eine als Kernbohrung ausgeführte Wandöffnung eingebauten Rohres bei einer grabenlosen Rohrsanierung;
- Fig. 8: eine Querschnittsansicht einer Rohrmanschette; und
- Fig. 9: eine weitere Querschnittsansicht eines in eine als Kernbohrung ausgeführte Wandöffnung eingebauten Rohres bei einer grabenlosen Rohrsanierung.

In der nachfolgenden Beschreibung sind gleiche und gleichbedeutende Teile mit den gleichen Bezugszeichen versehen.

### (Erstes Ausführungsbeispiel)

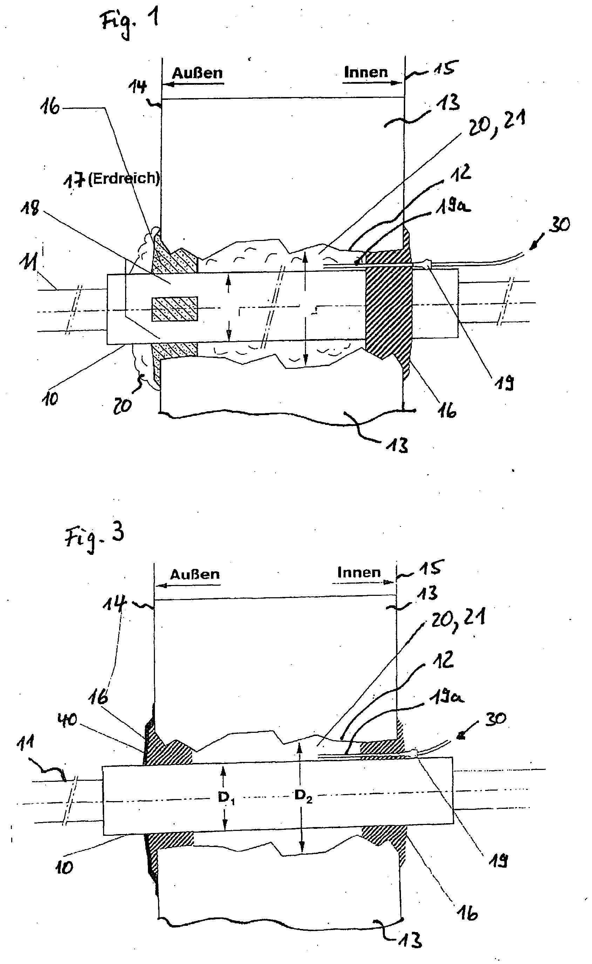

In Fig. 1 ist ein Rohr 10, durch welches eine mediumführende Leitung 11 geführt ist, in eine Öffnung 12 in einer Gebäudewand 13 bzw. eine Wandöffnung 12 eingebaut. Das Rohr 10 ist an der Außenseite 14 und Innenseite 15 der Gebäudewand 13 in der Wandöffnung 12 mit einem Schaumstoffdichtungs- und Zentrierband 16 in der Wandöffnung 12 zentriert, wobei die Außenseite 14 der Gebäudewand 13 bzw. der Wandöffnung 12 an das Erdreich 17 angrenzt. In dem Schaumstoffdichtungs- und Zentrierband 16 auf der Außenseite 14 der Wandöffnung 12 sind Öffnungen 18 zum Erdreich 17 vorhanden. Die Zentrierung des Rohrs 10 in der Wandöffnung 12 kann auf der Innenseite 14 der Wandöffnung 12 anstelle des Schaumstoffdichtungs- und Zentrierbands 16 auch mit Schnellmontagemörtel erfolgen.

In dem Schaumstoffdichtungs- und Zentrierband 16 auf der Innenseite 15 der Wandöffnung 12 ist ein Einfüllrohr 19 eingesetzt, um expandierendes Verpressharz 20 in einen Raum 21 einzufüllen, der zwischen Rohr 10, Wandöffnung 12, Schaumstoffdichtungs- und Zentrierband 16 auf der Außenseite 14 und Schaumstoffdichtungs- und Zentrierband 16 auf der Innenseite 15 ausgebildet ist. Dieser Raum 21 ist genauer gesagt ein gekammerter Raum 21 oder auch gekammerter Ringraum.

Mit dem expandierenden Verpressharz 20 kann ein kraftschlüssiges Abdichten und Befestigen des Rohrs 10 in der Wandöffnung 12 erfolgen, wobei Bauteilbewegungungen (Torsion) zugelassen werden und eine axiale Verdrehsicherheit besteht. Das expandierende Verpressharz 20 ist nachfolgend noch ausführlicher beschrieben.

Das Schaumstoffdichtungs- und Zentrierband 16 auf der Außenseite 14 und das Schaumstoffdichtungs- und Zentrierband 16 auf der Innenseite 15 der Wandöffnung 12 sind Teile einer Raumerzeugungseinrichtung. Das Schaumstoffdichtungs- und Zentrierband 16 ist vorzugsweise einseitig selbstklebend. Es besteht aus einem verottungsfesten, imprägnierten Schaumstoff, der zurückgepresst eingebaut wird und somit die Einbauteile, also das Rohr 10 usw., zentriert.

Aufgrund der Öffnungen 18 zum Erdreich 17 in dem Schaumstoffdichtungs- und Zentrierband 16 auf der Außenseite 14 der Wandöffnung 12 tritt das expandierende Verpressharz 20 auch teilweise zum Erdreich 17 hin aus, wie aus Fig. 1 ersichtlich.

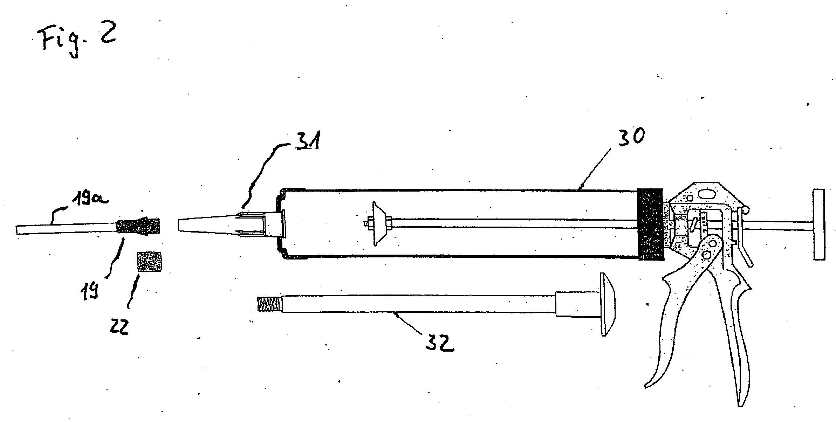

Das Einfüllrohr 19 ist in Fig. 1 mit Schlauchverlängerung 19a dargestellt. Auf das Einfüllrohr 19 kann eine in Fig. 2 dargestellte Sicht- und Kontrollkappe 22 zum Sichten und Kontrollieren eines Füllstands des expandierenden Verpressharzes 20 in dem gekammerten Raum 21 aufgesetzt werden. Wird die Sicht- und Kontrollkappe 22 von dem Einfüllrohr 19 abgenommen, kann das expandierende Verpressharz 20 mit Hilfe einer in Fig. 2 dargestellten Handdruckpistole 30 mit Düsenspitze 31 in das Einfüllrohr 19 und damit den gekammerten Raum 21 eingefüllt werden. Der in Fig. 2 gezeigte Mischstab 32 dient zum Mischen des 2-komponentigen expandierenden Verpressharzes 20, was später noch genauer beschrieben ist.

Evtl. vorhandene Öffnungen in der Gebäudewand 13 unter der Wandöffnung 12, die beispielsweise in einer aus Ziegelmauerwerk oder Hohlkammersteinen gemauerten Wand vorhanden sein können, sind vor dem Einbau des Rohrs 10 in die Wandöffnung 12 mit Füllgranulat aufzufüllen. Ferner ist auch denkbar, entsprechende Öffnungen mit dem expandierenden Verpressharz unter zumindest teilweisen Verzicht von Füllgranulat auszufüllen. Dies ist vorteilhaft, da durch die gas- und/oder wasserabdichtende Wirkung des ausgehärteten expandierenden Verpressharzes Hohlräume, welche besonders Staunässe anfällig sind, ausgefüllt werden, um so Schimmelbildung im Mauerwerk vorzubeugen.

Die beschriebene Abdichtung des Rohrs 10 in der Gebäudewand 13 ist dauerhaft wasserdicht. Der verbleibende Hohlraum ist nur so gasdicht, wie der Bauwerkstoff der Gebäudewand 13.

Das expandierende Verpressharz 20 ist ein gas- und wasserdichtes 2-Komponenten EpoxidHarz (Verpressharzschaum) von sehr hoher Dichte, Härte und Druckfestigkeit mit eingebautem Treibmittel zur selbstständigen, kontrollierten Volumenvergrößerung.

Das eingebaute Treibmittel bedingt die Expansion des Verpressharzes bevorzugt durch chemische Reaktionen. Bei Vermischung der Komponenten A und B miteinander entsteht in einem exothermen Reaktionsprozess Energie in Form von Wärme. Diese Wärme ist ausreichend, um von den Komponenten flüchtige Bestandteile abzuspalten, wodurch eine Volumenzunahme des Verpressharzes bedingt wird. Darüber hinaus kann auch das Verpressharz beispielsweise mittels Zufuhr eines Gases, beispielsweise CO₂ oder (teilfluorierte) Kohlenwasserstoffe, einer Volumenexpansion unterliegen. Je nach Wahl des vorgegebenen Treibmittels, sind die Kammern, in welchen die Komponenten A und B angeordnet sind bzw. in den Kammerabschnitten bzw. Spritzdüsenabschnitten, in welchen eine Mischung der Komponenten A und B erfolgt, entsprechend aus Hitze stabilem Material und/oder druckbeständigem Material auszubilden.

Das expandierende Verpressharz 20 ist geeignet zum kraftschlüssigen Abdichten und Befestigen von Rohrdurchführungen im Neubau, Altbau und Sanierung sowie Verfüllen oder Vergießen von:
- Hausanschlüssen für Strom, Gas, Wasser, Fernwärme
- Hausanschlüsse für Kommunikationsleitungen
- Maueröffnungen in Gebäudewänden
- Alle Arten von Öffnungen, Durchführungen oder Sicken in der Flugzeugindustrie, Fahrzeugindustrie, dem Maschinenbau, dem Schiffsbau, dem Schwimmbadbau und den Elektro-/Elektronikbereichen.

Die Materialbasis des expandierenden Verpressharzes 20 ist ein chemisch härtendes 2-Komponenten Epoxidharz. Genauer gesagt, besteht das expandierende Verpressharz 20 aus einer A-Komponente (expandierendes Verpressharz) und einer B-Komponente (expandierender Verpresshärter), die vor Gebrauch miteinander zu vermischen sind. Hierzu wird das expandierende Verpressharz vorzugsweise in einer Doppelkammerkartusche ausgeliefert, in welcher die A- und B-Komponente im Auslieferungszustand in voneinander getrennten Kammern aufgenommen sind. Vor dem Einfüllen des expandierenden Verpressharzes 20 beispielsweise in eine Öffnung ist die Trennung zwischen den beiden Kammern zu entfernen und die A- und B-Komponente des expandierenden Verpressharzes 20 zu vermischen. Dies kann durch Einlegen der mit der A- und B-Komponente gefüllten Doppelkammerkartusche in die in Fig. 2 gezeigte Handdruckpistole 30 und Eindrücken einer zwischen den einzelnen Kammern der Doppelkammerkartusche vorhandenen Platte erfolgen, die in Fig. 2 nicht dargestellt ist. Mit dem Mischstab 32 sind ca. 40 bis 50 Mischhübe auszuführen um die A- und B-Komponente des expandierenden Verpressharzes 20 zu vermischen.

Die Ausbildung der beschriebenen Doppelkammerkartusche ist nicht auf das angeführte Beispiel begrenzt. So ist darüber hinaus denkbar, dass die beiden Kammern, in welchen jeweils Komponente A und Komponente B räumlich voneinander getrennt vorliegen, direkt benachbart zueinander angeordnet sind und eine gemeinsame Kontaktfläche in ihrer Längsrichtung aufweisen. Bevorzugt ist kein zusätzliches Gehäuse vorgesehen, welches die beiden Kammern umschließt. Diese Seite-an-Seite-Anordnung der Kammern ist besonders vorteilhaft, da das oben erwähnte manuelle Mischen der Komponenten A und B entfällt. Nach Einlegen der Kammern in eine dafür geeignete Handdruckpistole (nicht gezeigt) wird jede Kammer mit einem Druck beaufschlagt, welchen den Austritt beider Komponenten A und B in die Spritzdüse 31 sowie deren ausreichende Vermischung innerhalb der Spritzdüse miteinander bedingt. Bevorzugt werden die Kammern mit gleichem Druck, bevorzugt manuell, beaufschlagt. Ferner kann mittels der Handdruckpistole jede der Kammern mit einem zueinander unterschiedlichem Druck beaufschlagt werden, was besonders dann erfolgt, wenn Komponente A und Komponente B in unterschiedlichen Massenanteilen zur Herstellung der 2K-Mischung benötigt werden. Daher ist denkbar, dass die beiden Kammern A und B bevorzugt unterschiedliche Volumina zur Aufnahme der Komponenten A und B aufweisen. Darüber hinaus ist denkbar, dass die gemeinsame Kontaktfläche zwischen den Kammern lösbar und durch Zugbeaufschlagung zumindest teilweise entfernbar ist.

Weiterhin ist denkbar, dass die Kammern koaxial zueinander angeordnet und bevorzugt zumindest in ihrer Längsrichtung von einem Gehäuse umschlossen sind. Hierbei wird eine Kammer von der zweiten Kammern mantelartig umschlossen, wobei die in den Kammern angeordneten Komponenten räumlich voneinander getrennt angeordnet sind. Bei Druckbeaufschlagung einer derartigen Kartusche in einer geeigneten Handdruckpistole werden, im einfachsten Fall, beide Kammern mit dem gleichen Druck beaufschlagt, welcher das Austreten beider Komponenten aus der jeweiligen Kammer in die Spritzdüse 31 bedingt. Vorteilhaft erfolgt ein Vermischen der Komponenten innerhalb der Spritzdüse 31, welche über Verwirbelungselemente, wie beispielsweise schraubenartig gewundene bzw. plattenartig angeordnete Elemente, zum besseren Vermischen verfügt. Ferner ist auch denkbar, dass ein zusätzlicher Hohlraum, welcher der Spritzdüse 31 vorgeordnet ist, vorgesehen ist, in welchem beide Komponenten bei Druckbeaufschlagung aus den Kammern austreten und sich darin miteinander vermischen bevor die Mischung aus der Spritzdüse austritt. Ferner ist auch denkbar, die gemeinsame Kammerfläche lösbar anzuordnen, um das Vermischen beider Komponenten zu erleichtern.

Selbstverständlich ist die Ausführung der Kartusche nicht auf die hier erwähnten Beispiele beschränkt. So ist es beispielsweise denkbar, dass weitere Kammern vorgesehen sind, welche.beispielsweise Additive zur Veränderung der Rheologieeigenschaften oder Expansionseigenschaften bereitstellen. Vorteilhaft sind alle in den Kammern angeordneten Komponenten räumlich voneinander getrennt, wobei die Trennungsflächen beliebig lösbar angeordnet sein können. Darüber hinaus ist denkbar, dass Additive, wie beispielsweise Füllstoffe, den Komponenten A und/oder B direkt beigemengt sind.

Die Komponente A des expandierenden Verpressharzes 20 besteht vorzugsweise aus Bisphenol - A - Epichlorhydrinharz (CAS: 25068-38-6), Bisphenol - F - Epichlorhydrinharz (CAS: 9003-36-5) und Tosylisocanat (CAS: 4083-64-1). Die Komponente B des expandierenden Verpressharzes 20 besteht vorzugsweise aus Isophorondiamin (CAS: 2855-13-2), Trimethylhexamethylendiamin (CAS: 25620-58-0) und Diethylentriamin (CAS: 111-40-0) und p-tert-Butylphenol (CAS: 98-54-4).

Das beispielhafte expandierende Verpressharz 20 hat zudem die folgenden Eigenschaften:

| | |
|---|---|
| Verarbeitungstemperatur: | von +10°C bis +40°C |
| Objekttemperatur: | ab + 5 °C |
| Objekttemperatur im Winterbau: | ab + 5 °C bei Beachtung gewisser Einbauregeln |
| Topfzeit nach dem Mischvorgang: | 3 bis 4 Minuten |
| Härtedauer: | bei 20°C ca. 45 bis 60 Minuten |
| Belastbar (gas- und wasserdicht): | bei 20°C nach ca. 100 Minuten |
| Enddurchhärtung: | ca. 1 bis 2 Tage/ab +5°C |
| Spezifisches Gewicht: | ca. 1,06 |
| Dichte: | ca. ≥ 400 kg/m³ |
| Festkörpervolumen: | 100% - absolut schwundfrei |
| Temperaturbeständig: | -40°C bis +120°C (im gekammerten Raum) |
| Chemische Beständigkeit: | Gase G 260/I, G 260/II einschließlich Flüssiggas, Wasser, Medien nach DIN 18195 T.5 |
| Farbe: | weiß (ca. RAL 9001) |
| Brandverhalten (Baustoffklasse): | B1, DIN 4102 (im gekammerten Raum); Die Dichtebene kann mangels Sauerstoffzufuhr und selbstverlöschender Einstellung nicht weiter brennen |
| Spezifischer Widerstand:. | 10⁶ Ohm/cm² |
| Durchschlagfestigkeit: | 6500 Volt/Schutz gegen Elektrokorrosion |
| Elektrische Isolierstoffklasse: | H/Korrosiorisbeständig gegen mechanische und chemische Angriffe |
| MAK-Wert des Vernetzerspaltproduktes (mg/m³): | ca. 60 (bei +20°C - 1010 mbar) |
| Geruch | Eigengeruch in der Härtephase - im ausgehärteten Zustand geruchlos, nicht gesundheitsschädlich |
| Normen und Richtlinien: | wie zuvor erwähnt |
| Lagerzeit: | 12 Monate (ungeöffnet im Karton) |
| Lagerung: | kühl, trocken und im Karton aufrechtstehend |
| Lagertemperatur: | > +10°C bis +40°C |

Das expandierende Verpressharz 20 erzeugt während der Aushärtezeit eine exotherme Wärmereaktion. Dieser Wärmeprozess sorgt dafür, dass die evtl. vorhandene Restfeuchtigkeit, z.B. innerhalb der Wandöffnung oder eines Kernbohrloches, verdampft und gleichzeitig ein haftungsfähiger trockener Untergrund entsteht, der dann eine kraft- und formschlüssige Verbindung gewährleistet. Die Zugkräfte werden durch das Expandieren des Verpressharzes übertragen, das als flüssige Kunststoffumformulierung beispielsweise in eine Mauerwerksöffnung eingebracht wurde. Durch die selbstständige Volumenvergrößerung des expandierenden Verpressharzes während des Aushärtevorgangs werden auch feinste Kavitäten kraftund formschlüssig verfüllt, wodurch eine dauerhaft mechanische feste Raumverbindung, beispielsweise vom Mantelrohr 10 zur Gebäudewand 13, geschaffen wird. Die Volumenvergrößerung liegt nach dem Mischvorgang der A- und B-Komponente des Verpressharzes 20 bei 3,0 bis 5,0 : 1, bevorzugt bei 3,5 bis 4,0 : 1, im gekammerten Raum.

Genauer gesagt, ergibt sich beispielsweise bei einer 2-Komponenten Doppelkammerkartuschen Verpackung - Arbeitspackung mit einem Inhalt von 300 ml durch die expansive Einstellung des Epoxidharzmaterials ein Füllvolumen bei 20 °C von 1200 ml im gekammerten Raum. Außerdem ergibt beispielsweise eine 2-Komponenten Doppelkammerkartuschen Verpackung - Arbeitspackung mit einem Inhalt von 600 ml, bzw. eine angemischte Menge von 600 ml, ein Füllvolumen von 2400 bis 2600 ml. Ferner ergibt eine angemischte Menge von 500 ml, ein Füllvolumen von 2200 ml bzw. 2400 ml. Andere angemischten Mengen des expandierenden Verpressharzes 20 ergeben ein den genannten Beispielen entsprechendes Füllvolumen. Das heißt, das Expansionsvolumen des expandierenden Verpressharzes 20 entspricht somit 3,0 - 5,0 : 1 im gekammerten Raum. Die maximale Spaltmaßabmessung des gekammerten Raums hat hierbei bevorzugt einen Durchmesser von < 300 mm und eine Tiefe < 600 mm.

Das ausgehärtete expandierende Verpressharz 20 kann mit allen am Bau üblichen Anstrichsystemen überstrichen werden. Entsprechend der Prüfnorm DVGW-Arbeitsblatt G-459-1-G-450-2 und VP-601 können Zugkräfte von mindestens 30 kN über den gesamten Querschnitt auf die Gebäudewand abgeleitet werden. Zudem werden die in der G459 1-2 geforderte Gasdichtigkeit von 4 bar (1 bar = 10⁵ Pa), die in der VP601 geforderte Gasdichtigkeit von 1 bar (1 bar = 10⁵ Pa) und die Wasserdichtigkeit von 10 bar (1 bar = 10⁵ Pa) erfüllt, in Verbindung mit der darin geforderten Torsionssicherheit und Ausziehsicherheit.

Eine kontrollierte gas- und wasserdichte Abdichtung sowie ein kraft- und formschlüssiger Verbund zwischen Gebäudewand 13 und Einbauteilen, wie beispielsweise dem Rohr 10, welches ein Kunststoff-Mantelrohr, eine Rohrkapsel, eine Hauseinführungskombination, eine Hauseinführung im Festpunkteinbau, ein Steinzeug-/Zementrohr, ein Duktilguss und Stahlrohr sein kann, entspricht den allgemein anerkannten Regeln der Technik sowie der DVGW-Norm, Arbeitsblatt G-459-1-G-459-2, G459-1 B, VP 601 (für den Bereich Gas), DVGW-Norm EW-400-1, EW-400-2, EW-400-3, Merkblatt W-404 (für den Bereich Wasser), GW-322-2 (für den Bereich grabenlose Auswechslung von Gas- und Wasserrohleitungen), in Verbindung mit einem Kernbohrsystem, sowie den DIN Normen 18012/18195/18336/1986/1988.

Um den in Fig. 1 dargestellten Einbau des Rohrs 10 in die Wandöffnung auszuführen, ist zuerst das Rohr 10 in die Wandöffnung 12 einzusetzen. Daraufhin wird das Einfüllrohr 19 in den Raum zwischen Rohr 10 und Wandöffnung 12 eingeschoben. Dann wird das Einfüllrohr 19 in die Raumerzeugungseinrichtung eingesetzt und ein gekammerter Raum 21 zwischen dem Rohr 10 und der Wandöffnung 12 mit der Raumerzeugungseinrichtung erzeugt. Daran anschließend wird das expandierende Verpressharz 10 mit einem Expansionsvolumen von 3,0 bis 5,0 : 1, bevorzugt 3,5 bis 4,0 : 1, im gekammerten Raum 21 in den mit der Raumerzeugungseinrichtung erzeugten gekammerten Raum 21 eingebracht.

### (Zweites Ausführungsbeispiel)

Fig. 3 zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede identisch zu dem ersten Ausführungsbeispiel. Gleiche Teile werden somit nicht erneut beschrieben.

Bei diesem Ausführungsbeispiel sind auf der Außenseite 14 der Wandöffnung 13 keine Öffnungen 18 vorhanden, so dass kein expandierendes Verpressharz 20 zum Erdreich 17 hin austreten kann. In Fig. 2 ist der gekammerte Raum 21 somit vollständig geschlossen.

Zudem ist das Schaumstoffdichtungs- und Zentrierband 16 auf der Außenseite 14 der Wandöffnung 12 und der darum herum angeordnete Bereich der Außenwand 14 mit einem bituminösen Anstrich 40 versehen.

### (Drittes Ausführungsbeispiel)

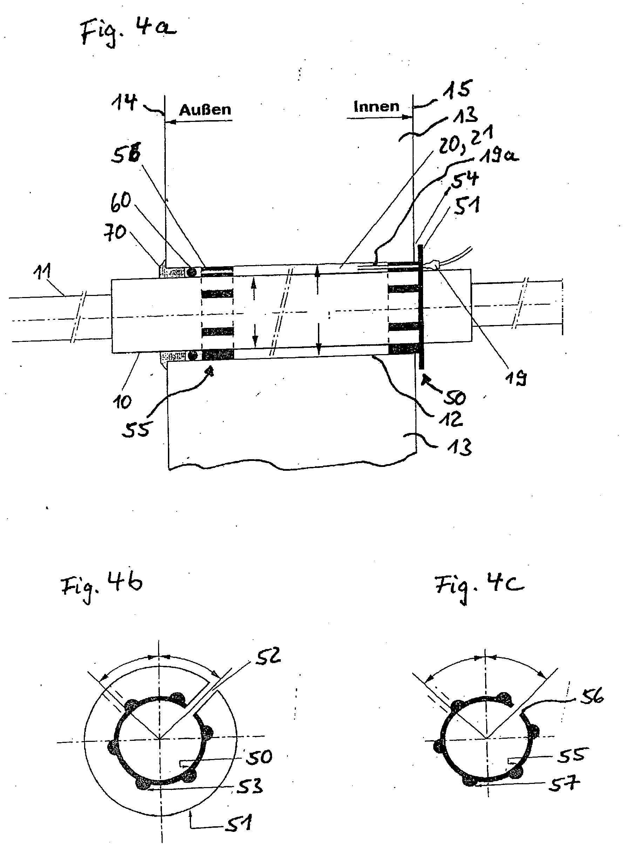

Fig. 4a zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede identisch zu dem ersten Ausführungsbeispiel. Gleiche Teile werden somit nicht erneut beschrieben.

In diesem Fall ist die Wandöffnung 12 eine Kernbohrung, so dass die Wandöffnung 12 eine vergleichsweise glatte Innenwand aufweist, wie in Fig. 4a dargestellt. Auf der Innenseite 15 der Gebäudewand 13 ist anstelle eines Schaumstoffdichtungs- und Zentrierbands 16 ein Zentrierring 50 mit Flansch 51 und Einfüllöffnung 52 eingebaut. Die Einfüllöffnung 52 dient zum Einsatz des Einfüllrohrs 19 mit Schlauchverlängerung 19a. Der Zentrierring 50 hat an der äußeren Ringschale mehrere halbkreisförmige Ausbuchtungen 53, die in Fig. 4b in der Draufsicht besser dargestellt sind. Zur besseren Abdichtung des Zentrierrings 50 gegenüber der Innenseite 15 der Gebäudewand 13 ist ein Schaumstoffdichtungsring 54 zwischen Zentrierring 50 und Innenseite 15 der Gebäudewand 13 eingesetzt.

Auf der Außenseite 14 der Gebäudewand 13 ist in Fig. 4a anstelle eines Schaumstoffdichtungs- und Zentrierbands 16 ein Zentrierring 55 ohne Flansch 51 jedoch mit Einfüllöffnung 56 eingebaut. Dieser Zentrierring 55 hat ebenfalls an der äußeren Ringschale mehrere halbkreisförmige Ausbuchtungen 57, die in Fig. 4c in der Draufsicht besser dargestellt sind.

Wie zudem aus Fig. 4a ersichtlich, ist neben dem Zentrierring 55, in der Richtung zu der Außenseite 14 der Gebäudewand 13, in der Kernbohrung ein Rollring 60 eingesetzt, vor dem wiederum in der Richtung zu der Außenseite 14 der Gebäudewand 13 eine bituminöse Abdichtung 70 in die Kernbohrung bzw. Wandöffnung 12 eingebracht ist. Die bituminöse Abdichtung 70 schließt die Wandöffnung 12 zu der Außenseite 14 der Gebäudewand 13 hin ab und kann auch den Bereich der Außenseite 14 der Gebäudewand 13 um die Wandöffnung 12 herum überdecken, wie in Fig. 4a gezeigt.

Bei dem diesem Ausführungsbeispiel sind die Zentrierringe 50, 55 Teile der Raumerzeugungseinrichtung.

### (Viertes Ausführungsbeispiel)

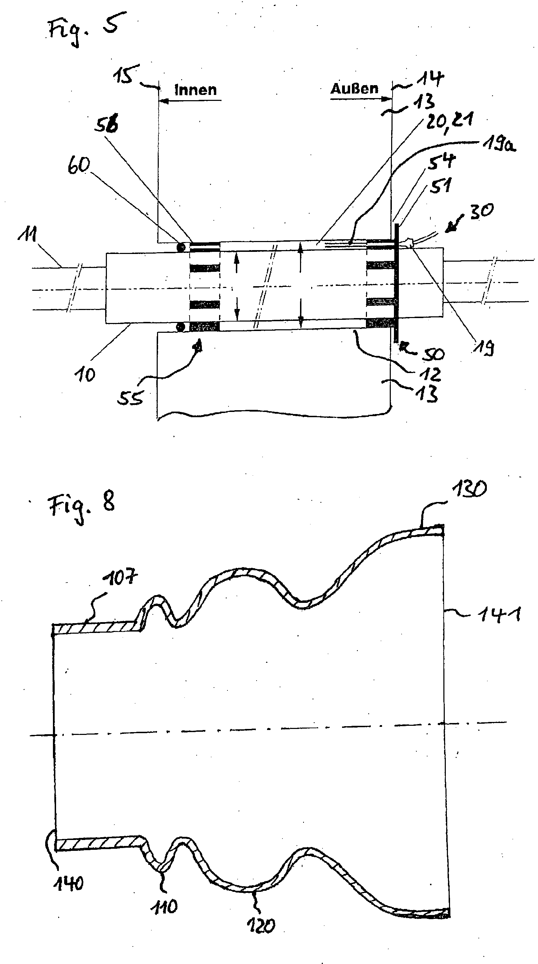

Fig. 5 zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede identisch zu dem dritten Ausführungsbeispiel. Gleiche Teile werden somit nicht erneut beschrieben.

Bei der in Fig. 5 gezeigten Kernbohrung bzw. Wandöffnung 12 ist der Zentrierring 50 mit Flansch 51 und Einfüllöffnung 52 auf der Außenseite 14 der Gebäudewand 13 eingebaut, wohingegen der Zentrierring 55 ohne Flansch 51 jedoch mit Einfüllöffnung 56 und der Rollring 60 auf der Innenseite 15 der Gebäudewand 13 eingebaut sind.

Somit kann die Abdichtung des Rohrs 10 in der Wandöffnung 12 von der Außenseite 14 der Gebäudewand 13 her erfolgen, so dass eine nachträgliche bituminöse Abdichtung 70 oder ein bituminöser Anstrich neben dem Rollring 60 nicht erforderlich ist.

### (Fünftes Ausführungsbeispiel)

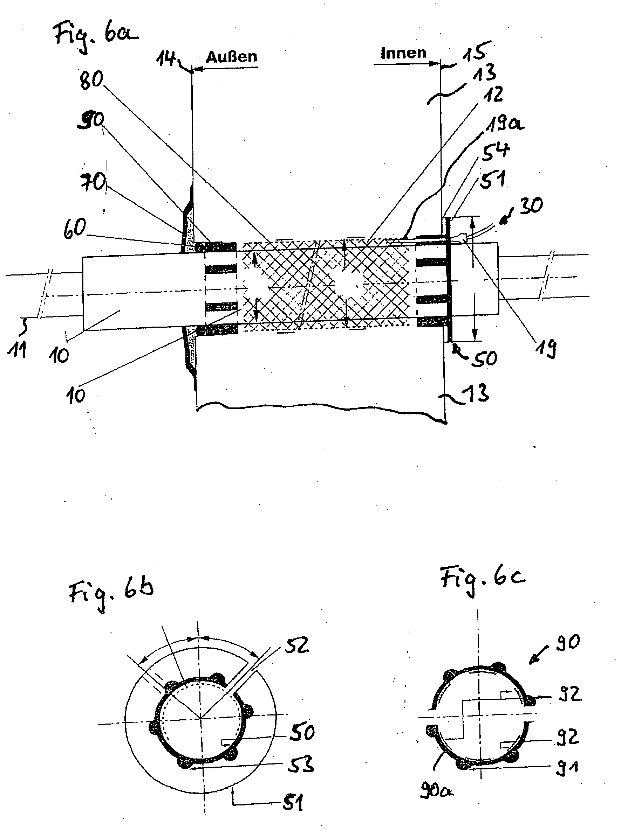

Fig. 6a zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede ebenfalls identisch zu dem dritten Ausführungsbeispiel. Gleiche Teile werden somit nicht erneut beschrieben.

Zwischen Rohr 10 und Kernbohrung bzw. Wandöffnung 12 ist in Fig. 6a ein Polyestergitter 80 eingebaut. Das Polyestergitter 80 ist genauer gesagt über die gesamte Abdichtungsstrecke und im oberen Teil der Kernbohrung bzw. Wandöffnung 12 (vgl. Fig. 6b) eingebaut. Das Polyestergitter 80 sorgt dafür, dass das expandierende Verpressharz 20 während seiner Flüssigphase, also kurz nach seinem Einfüllen, nicht durch das Polyestergitter 80 ablaufen kann. Somit wird erst in der Expansionsphase des expandierenden Verpressharzes 20, durch die kontrollierte Volumenvergrößerung des expandierenden Verpressharzes 20, eine kraft- und formschlüssige Abdichtung hergestellt. Ferner ist denkbar, weitere flexible Kunststoffnetze oder -gitter anstelle des Polyestergitters zu verwenden.

Der Zentrierring 55 ohne Flansch 51 und ohne Einfüllöffnung 56 des dritten Ausführungsbeispiels ist bei diesem Ausführungsbeispiel aus zwei Zentrierringhalbschalen 90 gebildet, die in Fig. 6a und Fig. 6c abgebildet sind. Die Zentrierringhalbschalen 90 haben ebenfalls an der äußeren Ringschale jeweils mehrere halbkreisförmige Ausbuchtungen 91, die in Fig. 6c in der Draufsicht besser dargestellt sind. Zudem haben die Zentrierringhalbschalen 90 mehrere Selbstklebestreifen 92, um die Zentrierringhalbschalen 90 an dem Rohr 10 fixieren zu können. Wie aus Fig. 6c ebenfalls ersichtlich, erfolgt der Einbau der Zentrierringhalbschalen 90 in versetzter Stellung. Die Zentrierringhalbschale 90a wird nachfolgend auch als untere Zentrierringhalbschale bezeichnet.

Gemäß Fig. 6a ist die bituminöse Abdichtung 70 des dritten Ausführungsbeispiels gemäß diesem Ausführungsbeispiel als bituminöser Anstrich ausgeführt, da der Rollring 60 und die Zentrierringhalbschalen 90 näher an der Außenseite 14 der Gebäudewand 13 angeordnet sind. Insbesondere ist der Rollring 60 derart in die Wandöffnung 12 eingesetzt, dass der Rollring 60 bündig mit der Außenseite 14 der Gebäudewand 13 abschließt.

Bei dem diesem Ausführungsbeispiel sind der Zentrierring 50, und die Zentrierringhalbschalen 90 Teile der Raumerzeugungseinrichtung.

### (Sechstes Ausführungsbeispiel)

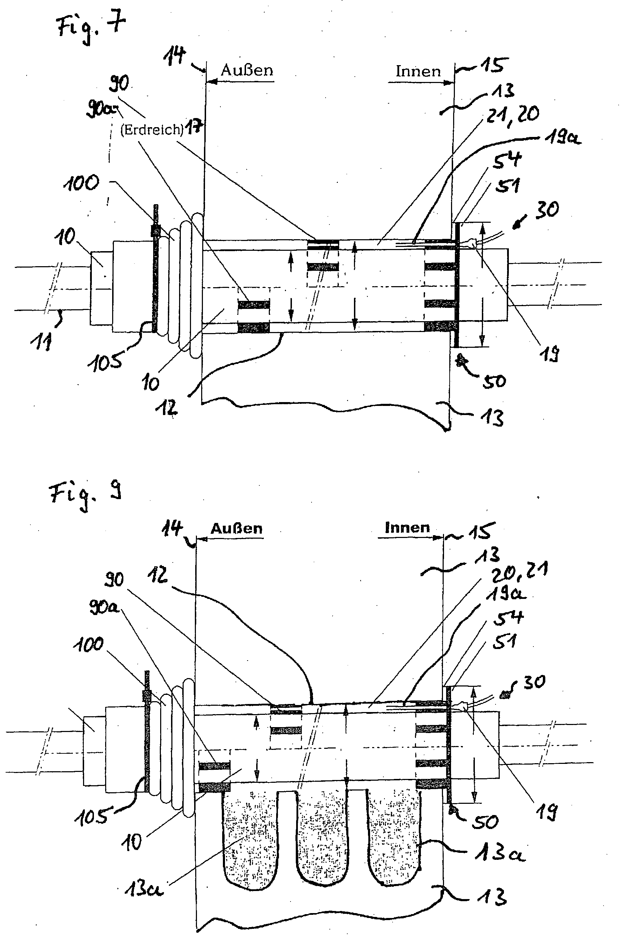

Fig. 7 zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede ebenfalls identisch zu dem dritten Ausführungsbeispiel. Gleiche Teile werden somit nicht erneut beschrieben.

Der Zentrierring 55 ohne Flansch 51 jedoch mit Einfüllöffnung 56 des dritten Ausführungsbeispiels ist bei diesem Ausführungsbeispiel ebenfalls aus zwei Zentrierringhalbschalen 90 gebildet, wie bei dem fünften Ausführungsbeispiel und wie in Fig. 7 und Fig. 6c abgebildet. Das heißt, im Unterschied zum fünften Ausführungsbeispiel sind bei diesem Ausführungsbeispiel die Zentrierringhalbschalen 90 an verschiedenen Stellen entlang der Dicke der Gebäudewand 13 angeordnet.

Zudem ist an dem Rohr 10 vor der Außenseite 14 der Gebäudewand 13 bzw. Wandöffnung 12 eine Rohrmanschette 100 mit Kabelbinder 105 montiert. Die Rohrmanschette 100 ist in Fig. 7 vor der Außenseite 14 der Gebäudewand 13 in sich zusammengeschoben. Dies wird durch die Ausführung der Rohrmanschette wie in Fig. 8 gezeigt und nachfolgend beschrieben möglich.

Wie in Fig. 8 dargestellt, hat die Rohrmanschette 100 einen flexiblen rohrförmigen Körper, der einen glatten rohrförmigen Abschnitt 107 und eine Vielzahl von ringförmigen Ausbuchtungen 110, 120, 130 aufweist. Ein Ende 140 des flexiblen rohrförmigen Körpers der Rohrmanschette 100 hat einen geringeren kreisförmigen Querschnitt als ein anderes Ende 141 des flexiblen rohrförmigen Körpers der Rohrmanschette 100. Der glatte rohrförmige Abschnitt 107 und die ringförmige Ausbuchtung 110 sind hierbei am nächsten zu dem Ende 140 mit dem geringeren kreisförmigen Querschnitt angeordnet. Die ringförmige Ausbuchtung 120 ist zwischen der ringförmigen Ausbuchtung 110 und der ringförmigen Ausbuchtung 130 angeordnet. Und die ringförmige Ausbuchtung 130 ist am nächsten zu dem Ende 141 mit dem größeren kreisförmigen Querschnitt angeordnet.

Die ringförmige Ausbuchtung 110 ist die schmalste ringförmige Ausbuchtung. Die ringförmige Ausbuchtung 130 ist die breiteste ringförmige Ausbuchtung. Die ringförmige Ausbuchtung 110 ist ein Halbring, der das andere Ende des rohrförmigen Körpers mit dem größeren kreisförmigen Querschnitt bildet und der durch Durchschneiden eines Rings in der Ebene seines Durchmessers gebildet ist. Darüber hinaus ist der äußere Ringdurchmesser der ringförmigen Ausbuchtung 110 der kleinste und der äußere Ringdurchmesser der ringförmigen Ausbuchtung 130 der größte äußere Ringdurchmesser.

Das heißt, die Breite und/oder der äußere Ringdurchmesser der ringförmige Ausbuchtungen 110, 120, 130 ist unterschiedlich und der Außendurchmesser der Vielzahl von ringförmigen Ausbuchtungen steigt von dem Ende des rohrförmigen Körpers mit dem geringeren kreisförmigen Querschnitt zu dem Ende des rohrförmigen Körpers mit dem größeren kreisförmigen Querschnitt hin an.

Die Rohrmanschette 100 ist vorzugsweise aus Kunststoff gefertigt. Bei einem größten Außendurchmesser von ca. 135 mm ist die Rohrmanschette passend für einen Durchmesser des Rohrs 10 von 73 bis 76 mm und eine Kernbohrung mit Durchmesser von 91 bis 101 mm. Die Rohrmanschette 100 ist im nicht zusammengeschobenen Zustand vorzugsweise ca. 130 mm lang.

Bei dem diesem Ausführungsbeispiel sind der Zentrierring 50, und die Rohrmanschette 100 Teile der Raumerzeugungseinrichtung.

Die Abdichtung des Rohrs 10 gemäß Fig. 8 ist besonders vorteilhaft bei der grabenlosen Rohrsanierung. Hierbei wird das Rohr 10 folgendermaßen eingebaut und abgedichtet.

Zuerst wird die Rohrmanschette 100 an dem Rohr 10 vormontiert, und zwar bevor das Rohr 10 in die Wandöffnung 12 eingesetzt ist. Hierbei bedeutet Vormontieren, dass die Rohrmanschette 100 derart an das Rohr 10 vormontiert wird, dass das Ende 140 des rohrförmigen Körpers mit geringeren kreisförmigen Querschnitt mittels Kabelbinder 105, vorzugsweise zwei Kabelbindern 105, an dem Rohr 10 befestigt wird. Genauer gesagt, die Rohrmanschette 100 wird, mittels Kabelbindern 105, vorzugsweise zwei Kabelbindern 105, auf dem glatten rohrförmigen Abschnitt 107 an dem Rohr 10 befestigt.

Daraufhin wird das Rohr 10 mit der vormontierten Rohrmanschette 100 derart von der Innenseite 15 der Gebäudewand 13 in die Wandöffnung 12 derart eingeschoben, dass das Ende 140 des rohrförmigen Körpers mit dem geringeren kreisförmigen Querschnitt zuerst in die Wandöffnung 12 eingeschoben wird. Hierbei wird das Rohr mit der vormontierten Rohrmanschette weiter durch die Wandöffnung 12 auf die Außenseite 14 der Gebäudewand 13 geschoben als die Rohrmanschette 100 lang ist. Danach wird das Rohr 10 mit der vormontierten Rohrmanschette 100 daran derart bewegt, dass sich die Rohrmanschette 100 an dem Rohr 10 wieder entfaltet. Anschließend wird das Rohr 10 mit der daran vormontierten Rohrmanschette 100 von der Innenseite 15 der Gebäudewand 12 her aus der Wandöffnung12 zurückgezogen, bis die Rohrmanschette 100 an der die Wandöffnung 12 umgebenden Wand 13 außen anliegt. Danach wird der Zentrierring 50 zwischen Rohr 10 und Wandöffnung 12 durch Einschieben des Einfüllrohrs 19 in die Einfüllöffnung 56 des Zentrierrings 50 geklemmt. Die übrigen Schritte zum Herstellen der fertigen Abdichtung des Rohrs 10 in der Wandöffnung 12 sind wie bei dem ersten Ausführungsbeispiel beschrieben.

### (Siebentes Ausführungsbeispiel)

Fig. 9 zeigt ein weiteres Ausführungsbeispiel für einen Einbau eines Rohrs 10 in einer Wandöffnung 12. Bei diesem Ausführungsbeispiel ist der Einbau des Rohrs 10 bis auf die nachfolgend beschriebenen Unterschiede identisch zu dem sechsten Ausführungsbeispiel. Gleiche Teile werden somit nicht erneut beschrieben.

Die Gebäudewand 13 ist in Fig. 9 mit drei Hohlkammern 13a unter der Kernbohrung bzw. Wandöffnung 12 dargestellt. Demzufolge ist die unten am Rohr 10 montierte Zentrierringhalbschale 90a derart an dem Rohr 10 und in der Wandöffnung 12 montiert, dass sie zwischen Rohr 10 und Gebäudewandsteg 13a angeordnet ist.

### (Allgemeines)

Das Rohr 10 ist beispielsweise ein Mantelrohr, Futterrohr, Mediumrohr, eine Rohrkapsel bzw. Hauseinführungskombination oder eine wellenförmige Ummantelung für eine Festpunktmontage. Das heißt, wie zuvor erwähnt, kann das Rohr 10 ein Kunststoff-Mantelrohr, eine Rohrkapsel, eine Hauseinführungskombination, eine Hauseinführung im Festpunkteinbau, ein Steinzeug-/Zementrohr, ein Duktilguss und Stahlrohr sein.

Das beschriebene System kann in Wandöffnungen bis ca. 800 mm eingebaut werden. Hierbei sind alle Wanduntergründe weitgehend trocken, tragfähig, staub- und fettfrei, sowie von eventuell lockeren Bauteilen zu befreien.

### Bezugszeichenliste

- 10: Rohr
- 11: mediumführende Leitung
- 12: Wandöffnung
- 13: Gebäudewand
- 13a: Hohlkammer
- 14: Außenseite der Gebäudewand 13
- 15: Innenseite der Gebäudewand 13
- 16: Schaumstoffdichtungs- und Zentrierband bzw. Schnellmontagemörtel
- 17: Erdreich
- 18: Öffnungen zum Erdreich 17
- 19: Einfüllrohr
- 19a: Schlauchverlängerung
- 20: expandierendes Verpressharz
- 21: gekammerter Raum
- 22: Sicht- und Kontrollkappe
- 30: Handdruckpistole
- 31: Düsenspitze
- 32: Mischstab
- 40: bituminöser Anstrich
- 50: Zentrierring mit Flansch
- 51: Flansch
- 52: Einfüllöffnung
- 53: halbkreisförmige Ausbuchtung
- 54: Schaumstoffdichtungsring
- 55: Zentrierring ohne Flansch
- 56: Einfüllöffnung
- 57: halbkreisförmige Ausbuchtung
- 60: Rollring
- 70: bituminöse Abdichtung bzw. Anstrich
- 80: Polyestergitter
- 90: Zentrierringhalbschale
- 90a: untere Zentrierringhalbschale
- 91: halbkreisförmige Ausbuchtungen
- 92: Selbstklebestreifen
- 100: Rohrmanschette
- 105: Kabelbinder
- 107: glatter rohrförmiger Abschnitt
- 130: ringförmige Ausbuchtung
- 140: Ende der Rohrmanschette 100 mit dem geringeren kreisförmigen Querschnitt
- 141: Ende der Rohrmanschette 100 mit dem größeren kreisförmigen Querschnitt

## Patentansprüche

1. System zum grabenlosen Einbau eines Rohrs (10) in einer Wandöffnung (12), mit einem Rohr (10) zum Einsatz in die Wandöffnung (12),
einer Raumerzeugungseinrichtung (16; 50, 55; 50, 90; 50, 100) zum Erzeugen eines gekammerten Raums (21) zwischen dem Rohr (10) und der Wandöffnung (12),
expandierendem Verpressharz (20) mit einem Expansionsvolumen von 3,0 bis 5,0 : 1 im gekammerten Raum (21) zum Einbringen in den durch die Raumerzeugungseinrichtung (16; 50, 55; 50, 90; 50, 100) erzeugten gekammerten Raum (21), und
einem Einfüllrohr (19) zum Einfüllen des expandierenden Verpressharzes (20) in den durch die Raumerzeugungseinrichtung (16; 50, 55; 50, 90; 50, 100) erzeugten gekammerten Raum (21) und zum Einsatz in die Raumerzeugungseinrichtung (16; 50, 55; 50, 90; 50, 100), **dadurch gekennzeichnet, dass** die Raumerzeugungseinrichtung eine Rohrmanschette (100) zum Aufsetzen auf das Rohr (10), bevor das Rohr (10) in die Wandöffnung (12) eingesetzt ist, und zum Einbringen zwischen die Wandöffnung (12) und
das Rohr (10) umfasst, wobei die Rohrmanschette (100) einen flexiblen rohrförmigen Körper aufweist, der eine Vielzahl von ringförmigen Ausbuchtungen (110, 120, 130) aufweist, welche in der Breite unterschiedlich sind.

2. System nach Anspruch 1, wobei das expandierende Verpressharz (20), bevorzugt ein Expansionsvolumen von 3,5 bis 4,0 : 1, im gekammerten Raum (21) aufweist.

3. System nach Anspruch 1 oder 2, wobei das Einfüllrohr (19) eine Schlauchverlängerung (19a) und eine Sicht- und Kontrollkappe (22) zum Sichten und Kontrollieren eines Füllstands des expandierenden Verpressharzes (20) in dem gekammerten Raum (21) aufweist, wobei das Einfüllrohr (19) zum Einsatz in die Raumerzeugungseinrichtung (16; 50) derart vorgesehen ist, dass die Sicht- und Kontrollkappe (22) außerhalb des erzeugten gekammerten Raums (21) angeordnet ist.

4. System nach einem der vorangehenden Ansprüche, wobei die Raumerzeugungseinrichtung einen Zentrierring (50) mit einem Flansch (51) zum Ansetzen an die die Wandöffnung (12) umgebende Wand (13) umfasst, wobei der Zentrierring (50) eine Einfüllöffnung (52) zum Einsatz des Einfüllrohrs (19) aufweist.

5. System nach einem der vorangegangenen Ansprüche, wobei das expandierende Verpressharz (20) schwundfrei ist, wenn es ausgehärtet ist.

6. System nach einem der vorangegangenen Ansprüche, wobei das expandierende Verpressharz (20) bei einem darauf wirkenden Betriebsdruck mindestens bis 4 bar (1 bar = 10⁵ Pa) gasdicht und bei einem darauf wirkenden Betriebsdruck mindestens bis 10 bar (1 bar = 10⁵ Pa) wasserdicht ist, wenn es ausgehärtet ist.

7. System nach einem der vorangegangenen Ansprüche, wobei das expandierende Verpressharz (20) ein Festkörpervolumen von 100 % hat, wenn es ausgehärtet ist.

8. System nach Anspruch 1, wobei ein Ende (140) des flexiblen rohrförmigen Körpers einen geringeren kreisförmigen Querschnitt als ein anderes Ende (141) des flexiblen rohrförmigen Körpers aufweist.

9. System nach einem der vorangegangenen Ansprüche , wobei die ringförmigen Ausbuchtungen (110, 120, 130) der Rohrmanschette (100) eine unterschiedliche Breite und/oder einen unterschiedlichen äußeren Ringdurchmesser haben.

10. System nach einem der vorangegangenen Ansprüche , wobei die größte ringförmige (130) Ausbuchtung der Vielzahl von ringförmigen Ausbuchtungen (110, 120, 130) ein Halbring ist, der das andere Ende (141) des rohrförmigen Körpers mit dem größeren kreisförmigen Querschnitt bildet und der durch Durchschneiden eines Rings in der Ebene seines Durchmessers gebildet ist.

11. System nach einem der vorangegangenen Ansprüche , wobei das Ende (140) des rohrförmigen Körpers mit dem geringeren kreisförmigen Querschnitt an die schmalste ringförmige Ausbuchtung (110) der Vielzahl von ringförmigen Ausbuchtungen angrenzt.

12. System nach einem der vorangegangenen Ansprüche , wobei die Vielzahl von ringförmigen Ausbuchtungen (110, 120, 130) derart angeordnet sind, dass der Außendurchmesser der Vielzahl von ringförmigen Ausbuchtungen (110, 120, 130) von dem Ende (140) des rohrförmigen Körpers mit dem geringeren kreisförmigen Querschnitt zu dem Ende (141) des rohrförmigen Körpers mit dem größeren kreisförmigen Querschnitt hin ansteigt.

13. Verfahren zum Einbau eines Rohrs (10) in einer Wandöffnung (12) mit einem System nach einem der vorangegangenen Ansprüche mit den Schritten:
• Vormontieren der Rohrmanschette (100) an dem Rohr (10), bevor das Rohr (10) in die Wandöffnung (12) eingesetzt ist, wobei die Rohrmanschette (100) derart an das Rohr (10) vormontiert wird, dass das Ende (140) des rohrförmigen Körpers mit geringeren kreisförmigen Querschnitt mittels Kabelbinder (105) an dem Rohr (10) befestigt wird,
• Einschieben des Rohres (10) mit der vormontierten Rohrmanschette in die Wandöffnung (12) derart, dass das Ende (140) des rohrförmigen Körpers mit dem geringeren kreisförmigen Querschnitt zuerst in die Wandöffnung (12) eingeschoben wird, wobei das Rohr (10) mit der vormontierten Rohrmanschette (100) weiter durch die Wandöffnung (12) geschoben wird als die Rohrmanschette (100) lang ist,Bewegen des Rohrs (10) und dadurch der vormontierten Rohrmanschette (100) derart, dass sich die Rohrmanschette (100) an dem Rohr (10) wieder entfaltet,
• Zurückziehen des Rohrs (10) aus der Wandöffnung (12), bis die Rohrmanschette (100) an einer Seite der die Wandöffnung (12) umgebenden Wand (13) außen anliegt,
• Erzeugen eines gekammerten Raums (21) zwischen dem Rohr (10) und der Wandöffnung (12) mit der Raumerzeugungseinrichtung (16; 50, 55; 50, 90; 50, 100), welche die Rohrmanschette (100) und einen Zentrierring (50) mit einem Flansch zum Ansetzen an die andere Seite der die Wandöffnung (12) umgebenden Wand (13) umfasst, wobei der Zentrierring (50) eine Einfüllöffnung (52) zum Einsatz des Einfüllrohrs (19) aufweist,
Klemmen des Zentrierrings (50) zwischen Rohr (10) und Wandöffnung (12) durch Einschieben des Einfüllrohrs (19) in die Einfüllöffnung (52) des Zentrierrings (50), welches zum Einfüllen von expandierendem Verpressharz (29) in den Raum dient,
• Einbringen von expandierendem Verpressharz (20) mit einem Expansionsvolumen von 3,0 bis 5,0 : 1 im gekammerten Raum in den mit der Raumerzeugungseinrichtung (16; 50, 55; 50, 90; 50, 100) erzeugten gekammerten Raum (21).

14. Verwendung eines Systems nach einem der Ansprüche 1 bis 12 zum grabenlosen Einbau eines Rohrs (10) in einer Wandöffnung (12).

## Claims

1. A system for the trenchless installation of a pipe (10) in a wall opening (12), having a pipe (10) for inserting into the wall opening (12),
a space generating device (16; 50, 55; 50, 90; 50, 100) for generating a chambered space (21) between the pipe (10) and the wall opening (12),
expanding injection resin (20) with an expansion volume of 3.0 to 5.0 : 1 in the chambered space (21) for introducing into the chambered space (21) generated by the space generating device (16; 50, 55; 50, 90; 50, 100), and
a filling pipe (19) for filling the chambered space (21) generated by the space generating device (16; 50, 55; 50, 90; 50, 100) with the expanding injection resin (20) and for inserting into the space generating device (16; 50, 55; 50, 90; 50, 100),
**characterised in that**
the space generating device comprises a pipe collar (100) for attaching to the pipe (10) before the pipe (10) is inserted into the wall opening (12) and for introducing between the wall opening (12) and the pipe (10),
wherein the pipe collar (100) has a flexible tubular body which has a plurality of annular bulges (110, 120, 130) which have different widths.

2. A system according to Claim 1, wherein the expanding injection resin (20) preferably has an expansion volume of 3.5 to 4.0 : 1 in the chambered space (21).

3. A system according to Claim 1 or 2, wherein the filling pipe (19) has a sleeve extension (19a) and a viewing and inspection cap (22) for viewing and inspecting a fill level of the expanding injection resin (20) in the chambered space (21), wherein the filling pipe (19) is provided for inserting into the space generating device (16; 50) in such a way that the viewing and inspection cap (22) is arranged outside the chambered space (21) generated.

4. A system according to one of the preceding claims, wherein the space generating device comprises a centring ring (50) having a flange (51) for placing against the wall (13) surrounding the wall opening (12), wherein the centring ring (50) has a filling opening (52) for inserting the filling pipe (19).

5. A system according to one of the preceding claims, wherein the expanding injection resin (20) does not shrink when it is cured.

6. A system according to one of the preceding claims, wherein the expanding injection resin (20) is gas-tight under an operating pressure of at least up to 4 bar (1 bar = 10⁵ Pa) and is water-tight under an operating pressure of at least up to 10 bar (1 bar = 10⁵ Pa), when it is cured.

7. A system according to one of the preceding claims, wherein the expanding injection resin (20) has a solid volume of 100% when it is cured.

8. A system according to Claim 1, wherein one end (140) of the flexible tubular body has a smaller circular cross-section than another end (141) of the flexible tubular body.

9. A system according to one of the preceding claims, wherein the annular bulges (110, 120, 130) of the pipe collar (100) have a different width and/or a different outer annular diameter.

10. A system according to one of the preceding claims, wherein the largest annular bulge (130) of the plurality of annular bulges (110, 120, 130) is a half ring, which forms the other end (141) of the annular body with the larger circular cross-section and which is formed by intersecting a ring in the plane of its diameter.

11. A system according to one of the preceding claims, wherein the end (140) of the tubular body with the smaller circular cross-section adjoins the narrowest annular bulge (110) of the plurality of annular bulges.

12. A system according to one of the preceding claims, wherein the plurality of annular bulges (110, 120, 130) are arranged in such a way that the outer diameter of the plurality of annular bulges (110, 120, 130) increases from the end (140) of the tubular body with the smaller circular cross-section to the end (141) of the tubular body with the larger circular cross-section.

13. A method for the installation of a pipe (10) in a wall opening (12) by means of a system according to one of the preceding claims, having the steps:
• pre-mounting the pipe collar (100) on the pipe (10) before the pipe (10) is inserted into the wall opening (12), wherein the pipe collar (100) is pre-mounted on the pipe (10) in such a way that the end (140) of the tubular body with the smaller circular cross-section is fastened to the pipe (10) by cable ties (105),
• pushing the pipe (10) with the pre-mounted pipe collar into the wall opening (12) in such a way that the end (140) of the tubular body with the smaller circular cross-section is firstly pushed into the wall opening (12), wherein the pipe (10) with the pre-mounted pipe collar (100) is pushed further through the wall opening (12) than the pipe collar (100) is long, moving the pipe (10) and thereby the pre-mounted pipe collar (100) in such a way that the pipe collar (100) opens out again on the pipe (10),
• withdrawing the pipe (10) from the wall opening (12) until the pipe collar (100) abuts externally against a side of the wall (13) surrounding the wall opening (12),
• generating a chambered space (21) between the pipe (10) and the wall opening (12) by means of the space generating device (16; 50, 55; 50, 90; 50, 100) which comprises the pipe collar (100) and a centring ring (50) with a flange for placing against the other side of the wall (13) surrounding the wall opening (12), wherein the centring ring (50) has a filling opening (52) for the insertion of the filling pipe (19),
• clamping the centring ring (50) between the pipe (10) and wall opening (12) by pushing the filling pipe (19) into the filling opening (52) of the centring ring (50), which filling pipe serves for filling the space with expanding injection resin (29),
• introducing expanding injection resin (20) with an expansion volume of 3.0 to 5.0 : 1 in the chambered space into the chambered space (21) generated by the space generating device (16; 50, 55; 50, 90; 50, 100).

14. The use of a system according to one of Claims 1 to 12 for the trenchless installation of a pipe (10) in a wall opening (12).

## Revendications

1. Système permettant le montage sans tranchées d'un tuyau (10) dans une ouverture de paroi (12), comprenant un tuyau (10) destiné à être inséré dans l'ouverture de paroi (12),
un dispositif de génération d'espace (16 ; 50, 55 ; 50, 90 ; 50, 100) destiné à générer un espace compartimenté (21) entre le tuyau (10) et l'ouverture de paroi (12),
une résine d'injection en expansion (20) présentant un volume d'expansion de 3,0 à 5,0 : 1 dans l'espace compartimenté (21) et destinée à être introduite dans l'espace compartimenté (21) généré par le dispositif de génération d'espace (16 ; 50, 55 ; 50, 90 ; 50, 100), et
un tuyau de remplissage (19) destiné à verser la résine d'injection en expansion (20) dans l'espace compartimenté (21) généré par le dispositif de génération d'espace (16 ; 50, 55 ; 50, 90 ; 50, 100) et destiné à être inséré dans le dispositif de génération d'espace (16 ; 50, 55 ; 50, 90 ; 50, 100),
**caractérisé en ce que**
le dispositif de génération d'espace comprend un manchon de tuyau (100) destiné à être mis en place sur le tuyau (10), avant que le tuyau (10) ne soit inséré dans l'ouverture de paroi (12), et destiné à être introduit entre l'ouverture de paroi (12) et le tuyau (10),
dans lequel le manchon de tuyau (100) comprend un corps tubulaire flexible, qui comporte une pluralité de protubérances (110, 120, 130) annulaires, lesquelles présentent des largeurs différentes.

2. Système selon la revendication 1, dans lequel la résine d'injection en expansion (20) présente de préférence un volume d'expansion de 3,5 à 4,0 : 1 dans l'espace compartimenté (21).

3. Système selon la revendication 1 ou 2, dans lequel le tuyau de remplissage (19) comprend une rallonge de tuyau (19a) et un capuchon d'inspection et de contrôle (22) permettant d'inspecter et de contrôler un niveau de remplissage de la résine d'injection en expansion (20) dans l'espace compartimenté (21), dans lequel le tuyau de remplissage (19) destiné à être inséré dans le dispositif de génération d'espace (16 ; 50) est prévu de telle sorte que le capuchon d'inspection et de contrôle (22) soit agencé à l'extérieur de l'espace compartimenté (21) généré.

4. Système selon l'une quelconque des revendications précédentes, dans lequel le dispositif de génération d'espace comprend un anneau de centrage (50) pourvu d'une bride (51) destinée à être appliquée contre la paroi (13) entourant l'ouverture de paroi (12), dans lequel l'anneau de centrage (50) comprend une ouverture de remplissage (52) permettant l'insertion du tuyau de remplissage (19).

5. Système selon l'une quelconque des revendications précédentes, dans lequel la résine d'injection en expansion (20) est sans retrait lorsqu'elle est durcie.

6. Système selon l'une quelconque des revendications précédentes, dans lequel la résine d'injection en expansion (20) est étanche au gaz lorsqu'une pression de service allant au moins jusqu'à 4 bar (1 bar = 10⁵ Pa) est appliquée sur celle-ci, et est étanche à l'eau lorsqu'une pression de service allant au moins jusqu'à 10 bar (1 bar = 10⁵ Pa) est appliquée sur celle-ci, lorsqu'elle est durcie.

7. Système selon l'une quelconque des revendications précédentes, dans lequel la résine d'injection en expansion (20) présente un volume de corps solide de 100 %, lorsqu'elle est durcie.

8. Système selon la revendication 1, dans lequel une extrémité (140) du corps tubulaire flexible présente une section transversale circulaire inférieure à celle d'une autre extrémité (141) du corps tubulaire flexible.

9. Système selon l'une quelconque des revendications précédentes, dans lequel les protubérances annulaires (110, 120, 130) du manchon de tuyau (100) présentent une largeur différente et/ou un diamètre annulaire extérieur différent.

10. Système selon l'une quelconque des revendications précédentes, dans lequel la plus grosse protubérance annulaire (130) de la pluralité de protubérances annulaires (110, 120, 130) est un demi-anneau, qui forme l'autre extrémité (141) du corps tubulaire présentant la plus grande section transversale circulaire et qui est formé par découpage d'un anneau dans le plan de son diamètre.

11. Système selon l'une quelconque des revendications précédentes, dans lequel l'extrémité (140) du corps tubulaire présentant la plus petite section transversale circulaire est adjacente à la plus mince protubérance annulaire (110) de la pluralité de protubérances annulaires.

12. Système selon l'une quelconque des revendications précédentes, dans lequel la pluralité de protubérances annulaires (110, 120, 130) sont agencées de telle sorte que le diamètre extérieur de la pluralité de protubérances annulaires (110, 120, 130) augmente de l'extrémité (140) du corps tubulaire présentant la plus petite section transversale circulaire à l'extrémité (141) du corps tubulaire présentant la plus grande section transversale circulaire.

13. Procédé de montage d'un tuyau (10) dans une ouverture de paroi (12) au moyen d'un système selon l'une quelconque des revendications précédentes, comprenant les étapes suivantes :
• pré-assembler le manchon de tuyau (100) sur le tuyau (10), avant que le tuyau (10) ne soit inséré dans l'ouverture de paroi (12), dans lequel le manchon de tuyau (100) étant préassemblé sur le tuyau (10) de telle sorte que l'extrémité (140) du corps tubulaire présentant la plus petite section transversale circulaire étant fixée sur le tuyau (10) au moyen d'attaches de câble (105),
• introduire le tuyau (10) sur lequel a été pré-assemblé le manchon de tuyau dans l'ouverture de paroi (12), de telle manière que l'extrémité (140) du corps tubulaire présentant la plus petite section transversale circulaire soit la première à être introduite dans l'ouverture de paroi (12), dans lequel le tuyau (10) sur lequel a été pré-assemblé le manchon de tuyau (100) est poussé à travers l'ouverture de paroi (12) plus loin que la longueur du tuyau de manchon (100), bouger le tuyau (10) et ainsi le manchon de tuyau (100) pré-assemblé de telle sorte que le manchon de tuyau (100) sur le tuyau (10) se déploie à nouveau,
• retirer le tuyau (10) de l'ouverture de paroi (12), jusqu'à ce que le manchon de tuyau (100) s'applique à l'extérieur contre une face de la paroi (13) entourant l'ouverture de paroi (12),
• générer un espace compartimenté (21) entre le tuyau (10) et l'ouverture de paroi (12) au moyen du dispositif de génération d'espace (16 ; 50, 55 ; 50, 90 ; 50, 100), lequel comprend le manchon de tuyau (100) et un anneau de centrage (50) présentant une bride destinée à être appliquée contre l'autre face de la paroi (13) entourant l'ouverture de paroi (12), dans lequel l'anneau de centrage (50) comprend une ouverture de remplissage (52) permettant l'insertion du tuyau de remplissage (19),
• serrer l'anneau de centrage (50) entre le tuyau (10) et l'ouverture de paroi (12) par introduction du tuyau de remplissage (19) dans l'ouverture de remplissage (52) de l'anneau de centrage (50), laquelle sert à verser la résine d'injection en expansion (20) dans l'espace,
• introduire dans l'espace compartimenté généré au moyen du dispositif de génération d'espace (16 ; 50, 55 ; 50, 90 ; 50, 100) la résine d'injection en expansion (20) présentant un volume d'expansion de 3,0 à 5,0 : 1 dans l'espace compartimenté (21).

14. Utilisation d'un système selon l'une quelconque des revendications 1 à 12 pour le montage sans tranchées d'un tuyau (10) dans une ouverture de paroi (12).
